# EUROPÄISCHE PATENTSCHRIFT

(11) **EP 4 011 575 B1**
(45) Veröffentlichungstag und Bekanntmachung des Hinweises auf die Patenterteilung: **14.06.2023**
(21) Anmeldenummer: 20213848.3
(22) Anmeldetag: 14.12.2020
(51) Int. Cl.: B26D 3/16, B26D 7/00, B26D 7/24

(54) **TRENNEINRICHTUNG FÜR ROHRE SOWIE VERFAHREN ZUM TRENNEN EINES ROHRABSCHNITTS VON EINEM ROHR MIT EINER SOLCHEN TRENNEINRICHTUNG**
SEPARATING DEVICE FOR PIPES AND METHOD FOR SEPARATING A PIPE SECTION FROM A PIPE WITH SUCH A SEPARATING DEVICE
DISPOSITIF DE SÉPARATION POUR TUBES AINSI QUE PROCÉDÉ DE SÉPARATION D'UNE SECTION D'UN TUBE DOTÉ D'UN TEL DISPOSITIF DE SÉPARATION

(43) Veröffentlichungstag der Anmeldung: 15.06.2022
(73) Patentinhaber: TRUMPF Schweiz AG, 7214 Grüsch (CH)
(72) Erfinder: JANUTIN, Andreas, 7000 Chur (CH); RIEDER, Niculin, 7304 Maienfeld (CH)
(74) Vertreter: Trumpf Patentabteilung

(56) Entgegenhaltungen:
- EP-A1- 3 053 684
- DE-A1-102011 080 450
- JP-A- 2000 237 914
- US-A- 2 291 395

## Beschreibung

Die Erfindung betrifft eine Trenneinrichtung für Rohre, insbesondere Kunststoffrohre, sowie ein Verfahren zum Trennen eines Rohrabschnitts von einem Rohr. Das Dokument DE-A-102011080450 offenbart eine Trenneinrichtung für Rohre, insbesondere Kunststoffrohre, - mit einem Führungswagen, der Laufrollen zum Abrollen an einem Außenumfang eines Rohres aufweist, - mit einer auf dem Führungswagen vorgesehenen Führung, - mit einer Sicherheitseinrichtung, - mit einem Spanngurt, der an dem Führungswagen befestigbar ist, und- mit einem Gurtspannelement, sodass der Führungswagen an einem Außenumfang des Rohres durch den Spanngurt anliegend und fixiert gehalten ist.

Das Trennen von im Durchmesser großen Kunststoffrohren, die aus einem Vollmaterial oder einem Innen- und Außenrohr gefüllt mit einer Isolation bestehen, erfordert, dass die Trenneinrichtung entlang einer Trennstrecke am Außenumfang des Rohres um 360° geführt und gehalten werden muss. Oftmals besteht das Problem, dass während dem Einbringen des Trennschnitts in das Kunststoffrohr eine Zugänglichkeit von nur einer Seite gegeben ist, sodass die gegenüberliegende Seite nicht mehr freihändig getrennt werden kann. Zu diesem Zweck werden Trenneinrichtungen, wie beispielsweise eine Kreissäge über eine Kette, geführt, die um das Kunststoffrohr gelegt wird. Diese Ketten sind in der Länge schwierig auf den Umfang des Kunststoffrohres einzustellen sowie deren Enden zu verbinden. Darüber hinaus ist eine komplizierte Anbindung an die Trenneinrichtung beziehungsweise die Kreissäge erforderlich.

Der Erfindung liegt die Aufgabe zugrunde, eine Trenneinrichtung für Rohre, insbesondere Kunststoffrohre, mit einem großen Durchmesser zu schaffen, welche eine einfache und sichere Handhabung sowie Anpassung an verschiedene Rohrdurchmesser ermöglicht.

Diese Aufgabe wird durch eine Trenneinrichtung für Rohre gelöst, welche einen Führungswagen umfasst, der Laufrollen zum Abrollen auf einem Außenumfang des Rohres aufweist. Auf dem Führungswagen ist eine Führung vorgesehen, die in entgegengesetzter Richtung zum Außenumfang des Rohres weist. Des Weiteren ist eine Sicherheitseinrichtung vorgesehen, welche eine Führungsaufnahme aufweist, durch welche die Sicherheitseinrichtung zur Führung am Laufwagen geführt ist und welche eine Anschlussschnittstelle aufweist, an die eine Trennvorrichtung anschließbar ist. Des Weiteren ist zumindest ein Laufwagen vorgesehen. Der zumindest eine Laufwagen und der Führungswagen sind durch einen Spanngurt miteinander verbunden. Über ein Gurtspannelement zum Spannen des Spanngurtes werden der Führungswagen und der zumindest eine Laufwagen an einem Außenumfang des Rohres anliegend fixiert und gehalten. Durch diese Trenneinrichtung ist nach dem Einstechen der Trennvorrichtung in das Kunststoffrohr eine einfache Handhabung der Trenneinrichtung von einer Position zum Kunststoffrohr ermöglicht. Durch eine Bedienperson kann der Führungswagen und der zumindest eine Laufwagen in einer radialen Schnittebene umlaufend zum zu schneidenden Rohr, insbesondere Kunststoffrohr, betätigt werden. Beispielsweise kann über die erste Hälfte des Umfanges der Führungswagen durch eine Fahrbewegung entlang des Außenumfangs des Rohres betätigt werden und darauffolgend, sofern nur ein weiterer Laufwagen vorgesehen ist, dieser Laufwagen um weitere 180° verfahren werden, sodass daraufhin der Führungswagen mit der Trennvorrichtung einmal um 360° herumgeführt ist. Anschließend ist der Trennschnitt eingebracht und ein Rohrabschnitt von dem Rohr abgetrennt.

Des Weiteren weist bevorzugt der Führungswagen ein Fahrwerk auf, an welchem beabstandet zwei Achsen zur Aufnahme von Laufrollen vorgesehen sind. Vorzugsweise sind zwei Paar Laufrollen zur verkippungsfreien Führung des Führungswagens vorgesehen. Zwischen den Achsen ist bevorzugt die Führung zur Aufnahme der Trennvorrichtung vorgesehen. Diese Führung erstreckt sich bevorzugt entgegengesetzt zur Abrollebene der Laufrollen. Insbesondere ist diese Führung außermittig zum Fahrwerk und vorzugsweise mittig zu dem Paar Laufrollen ausgerichtet, sodass ein Trennschnitt durch die Trennvorrichtung zwischen zwei äußeren Laufrollen am Fahrwerk des Führungswagens ermöglicht ist.

Nach einer weiteren vorteilhaften Ausführungsform des Führungswagens ist die Führung aus zumindest zwei, vorzugsweise in der Länge veränderbare und/oder lösbare, am Fahrwerk angeordnete Führungsstangen ausgebildet. Zum einen kann durch die lösbare Anordnung ein geringes Transportvolumen ermöglicht sein. Zum anderen können durch die veränderbare Länge unterschiedliche Trennvorrichtungen mit verschieden langen Trennschwertern in Anpassung an die Größe und/oder Dicke der Wandung der Rohre eingesetzt werden.

Bevorzugt ist am Fahrwerk des Führungswagens ein relativ zum Fahrwerk verschiebbares Abtastelement vorgesehen, welches sich zwischen den Laufrollen sowohl in Richtung auf den Außenumfang des Rohres als auch in entgegengesetzter Richtung entlang der Führung erstreckt. Dieses Abtastelement ist als Sicherheitselement vorgesehen. Sobald das Abtastelement eine vorgegebene Eintauchtiefe zwischen den Führungen aufweist, kann der Betrieb der Trennvorrichtung während dem Drehen der gesamten Trenneinrichtung entlang des Außenumfangs des Rohres aufrechterhalten werden. Sollte sich der Führungswagen lösen, steuert das Sicherheitselement ein Stillsetzen der Trennvorrichtung an.

Vorteilhafterweise greift der Spanngurt durch Haken den Führungswagen, vorzugsweise am Fahrwerk, an. Alternativ kann der Spanngurt an oder durch das Fahrwerk geführt gehalten und beispielsweise am Laufwagen eingehängt werden. Diese Ausbildung ermöglicht eine schnelle Einrichtung der Trenneinrichtung für einen nachfolgenden Trenn- oder Schneidprozess.

Der zumindest eine Laufwagen der Trenneinrichtung weist bevorzugt ein Fahrgestell auf, an welchem beabstandet zwei Achsen zur Aufnahme der Laufrollen vorgesehen sind und vorzugsweise zwischen den Achsen ein Betätigungsgriff am Fahrwerk angeordnet ist. Dadurch können die Trenneinrichtungen in einfacher Weise entlang des Außenumfangs des Rohres verfahren werden.

Das Fahrgestell des Laufwagens ermöglicht gemäß einer bevorzugten Ausführungsform, dass der Spanngurt hindurchführbar ist. Des Weiteren ist bevorzugt durch den Betätigungsgriff am Fahrgestell des Laufwagens eine Klemmvorrichtung zur Fixierung des Spanngurts zum Fahrgestell ausgebildet. Somit sind kurze Rüstzeiten möglich.

Die Sicherheitseinrichtung der Trenneinrichtung umfasst vorteilhafterweise ein Gehäuse, in welchem die Führungsaufnahmen vorgesehen sind und/oder in welchen zumindest ein Sensorelement zur Sicherheitsabfrage angeordnet ist. Diese Sicherheitseinrichtung ermöglicht und überwacht zum einen das Aufnehmen der Trennvorrichtung und die Positionierung der Trennvorrichtung zum Führungswagen, bevor ein Trennschnitt gesetzt wird und zum anderen die Einnahme der Trennposition, in welcher die Trennvorrichtung in schneidendem Eingriff zum Rohr ist. Durch das zumindest eine Sicherheitselement sind zumindest diese Positionen überwachbar.

In oder an dem Gehäuse der Sicherungseinrichtung ist zumindest ein Sensorelement zur Abfrage einer Aufsetzposition der Führungsaufnahmen an der Führung vorgesehen. Dieses Sensorelement kann mit weiteren Sensorelementen, insbesondere mit einer Ein-/Aus-Taste der Trennvorrichtung, gekoppelt sein, sodass erst nach Erkennen der Aufsetzposition eine Freigabe der Ein-/Aus-Taste der Trennvorrichtung ermöglicht wird.

An dem Gehäuse der Sicherheitseinrichtung und deren Schnittstelle zur Aufnahme der Trennvorrichtung zugeordnet ist bevorzugt ein weiteres Sicherheitsbedienelement vorgesehen. Dieses Sicherheitsbedienelement ist mit der Ein-/Aus-Taste der Trennvorrichtung gekoppelt. Somit ist bevorzugt eine Zweihandbedienung zum Start der Trennvorrichtung vorgesehen.

Das Sicherheitsbedienelement kann gemäß einer bevorzugten Ausführungsform durch eine Kombination aus wenigstens zwei Betätigungsaktionen aktivierbar sein. Bevorzugt sind eine Zieh- oder Drückbewegung und eine Dreh- oder Schiebebewegung miteinander kombinierbar. Erst nach einer wenigstens zweifachen Betätigung in unterschiedlichen Betätigungsrichtungen wird ein Schaltkontakt freigegeben und daraufhin erst das Einschalten durch die Ein- und Aus-Taste der Trennvorrichtung ermöglicht.

Des Weiteren ist bevorzugt die Sicherheitseinrichtung mit der angetriebenen Trennvorrichtung aus der Aufsetzposition entlang der Führung in eine Trennposition überführbar. Bei diesem Übergang erfolgt ein Einstechen der Trennvorrichtung in das Kunststoffrohr als erste Trennphase für das Abtrennen eines Rohrabschnitts.

An oder in dem Gehäuse der Sicherheitseinrichtung ist ein weiteres Sensorelement vorgesehen, welches durch das Abtastelement am Fahrwerk des Führungswagens beim Aufliegen des Führungswagens auf den Außenumfang des Rohres betätigt wird und die Einnahme der Schneidposition der Trennvorrichtung zur Führung am Führungswagen arretiert.

Bevorzugt sind die vorgenannten Sensorelemente und das Sicherheitsbedienelement in der Sicherheitseinrichtung derart aufeinander abgestimmt, dass eine aufeinanderfolgende Abfrage der Signale vorgesehen ist und beim Erfassen aller Signale die Trennvorrichtung nicht selbständig stillsetzt. Dadurch können erhöhte Sicherheitsanforderungen durch diese Trennvorrichtung erfüllt werden.

Gemäß einer bevorzugten Ausführungsform der Trennvorrichtung ist die an der Sicherheitseinrichtung angeordnete Trennvorrichtung als eine Kettensäge, Stichsäge oder Kreissäge ausgebildet. In Abhängigkeit der Trennaufgabe können dabei verschieden lange Schwerter eingesetzt werden, um die Wandstärken zu schneiden. Des Weiteren kann die Trennvorrichtung mit einem Akkumulator betrieben werden. Durch die kabellose Betätigung wird die Handhabung des Weiteren erleichtert.

Die der Erfindung zugrundeliegende Aufgabe wird des Weiteren durch ein Verfahren zum Trennen eines Rohrabschnittes von einem Rohr mit einer Trenneinrichtung nach einer der vorbeschriebenen Ausführungsformen gelöst. Dabei sind folgende Schritte vorgesehen:

Der Führungswagen und der zumindest eine Laufwagen werden mit einem Spanngurt verbunden, wobei ein offenes Ende des Spanngurtes verbleibt. Anschließend werden der Führungswagen und der zumindest eine Laufwagen auf den Außenumfang des Rohres positioniert. Das offene Ende des Spanngurtes wird bevorzugt an dem Führungswagen oder Laufwagen befestigt. Der Spanngurt kann durch ein Gurtspannelement gespannt werden. Der Führungswagen und der zumindest eine Laufwagen sind anliegend am Außenumfang des Rohres gehalten. Darauffolgend wird die Sicherheitseinrichtung mit der Trennvorrichtung auf der Führung des Führungswagens positioniert sowie das Sicherheitsbedienelement der Sicherheitseinrichtung und darauffolgend die Ein-/Aus-Taste der Trennvorrichtung betätigt. Die Trennvorrichtung wird von einer Aufnahmeposition in radialer Richtung zur Längsmittelachse des Rohres entlang der Führung bewegt, wodurch ein Einstich in das Rohr erfolgt, bis die Trennvorrichtung in die Schneidposition übergeführt wird. In der Schneidposition fixiert ein Rastbolzen die Maschinenposition. Anschließend wird der Führungswagen und darauffolgend der zumindest eine Laufwagen entlang des Außenumfangs einmal um 360° gedreht. Bevorzugt ist eine zusätzliche Führung zum Positionieren der Trenneinrichtung zur Trennstelle nicht erforderlich. Im Anschluss an eine Drehung der Trenneinrichtung um 360° ist der Rohrabschnitt abgetrennt. Die Demontage der Trenneinrichtung kann in umgekehrter Reihenfolge erfolgen. Alternativ kann auch ein Lösen des Gurtspannelementes und darauffolgend ein Lösen des Spanngurtes von dem Führungswagen oder Laufwagen vorgesehen sein, sodass die gesamte Trenneinrichtung vom Rohr abnehmbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer auf einem Rohr vorgesehenen Trenneinrichtung,
Figur 2 eine perspektivische Ansicht eines Führungswagens der Trenneinrichtung gemäß Figur 1,
Figur 3 eine perspektivische Ansicht eines Laufwagens der Trenneinrichtung gemäß Figur 1,
Figur 4 eine perspektivische Ansicht eines Führungswagens und Laufwagens in Vorbereitung auf einen Trennschnitt,
Figur 5 eine perspektivische Ansicht zur Positionierung einer Trennvorrichtung auf dem Führungswagen für einen Einstich in das Rohr,
Figur 6 eine erste schematische Ansicht auf eine Sicherheitseinrichtung in einer Aufnahmeposition zum Führungswagen gemäß Figur 5,
Figuren 7 bis 9 schematische Ansichten eines Sicherheitsbedienelementes für eine Zweihandbedienung zum Start der Trennvorrichtung,
Figur 10 eine schematische Seitenansicht der Sicherheitseinrichtung mit der Trennvorrichtung in einer Trennposition,
Figur 11 eine schematische Ansicht von vorne auf eine Trenneinrichtung vor Beginn eines Trennprozesses, und
Figur 12 eine schematische Ansicht von vorne auf die Trenneinrichtung während eines Trennprozesses.

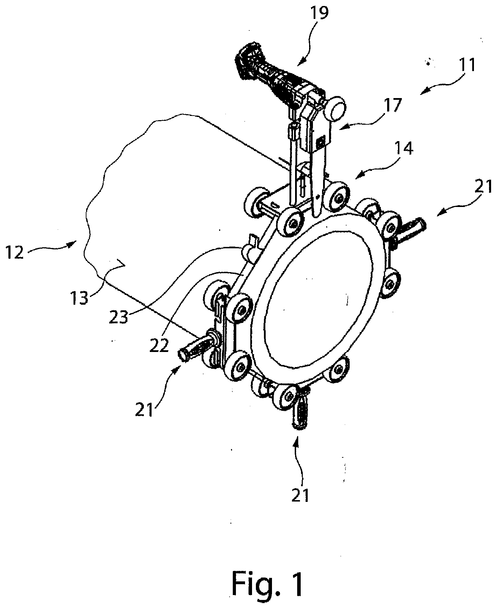

In Figur 1 ist eine perspektivische Ansicht einer Trenneinrichtung 11 dargestellt. Diese Trenneinrichtung 11 ist auf einem zu trennenden Rohr 12 montiert. Bei den zu trennenden Rohren 12 kann es sich beispielsweise um Kunststoffrohre mit einem großen Durchmesser handeln. Für eine Bedienperson ist es nicht möglich, eine Trennvorrichtung 19, wie beispielsweise eine Kettensäge, freihändig aus einer Bedienposition zum Rohr einmal vollständig um 360° entlang des Außenumfanges zu führen. Des Weiteren können solche Rohre 12, insbesondere Kunststoffrohre, aus einem Vollmaterial oder aus einem Innen- und Außenrohr gebildet sein, dessen Wandung mit einem Isoliermaterial, wie beispielsweise einem Schaum, gefüllt ist. Die Außenund Innenwand des Rohres 12 bestehen bevorzugt aus Kunststoff. Diese Trenneinrichtung 11 umfasst einen Führungswagen 14. Über eine Führung 15 am Führungswagen 14 ist eine Sicherheitseinrichtung 17 aufgenommen und geführt. Zusätzlich wird die Trennvorrichtung 19 auf der Führung 15 vor dem Rausfallen durch einen Rastbolzen gesichert und in der Endposition fixiert. Diese Sicherheitseinrichtung 17 nimmt wiederum die Trennvorrichtung 19 über eine Schnittstelle auf. Bei dieser Trennvorrichtung 19 kann es sich um eine Kettensäge handeln, ebenso kann eine Kreissäge oder Stichsäge vorgesehen sein. Die Trennvorrichtung 19 ist bevorzugt mit einem Akkumulator betrieben. Der Einsatz einer Kettensäge weist den Vorteil auf, dass eine Betätigungsrichtung der Trenneinrichtung 11, wie nachfolgend noch beschrieben sein wird, in beide Drehrichtungen zum Außenumfang des Rohres 12 erfolgen kann.

Des Weiteren umfasst die Trenneinrichtung 11 zumindest einen Laufwagen 21. Der Führungswagen 14 und der zumindest eine Laufwagen 21 sind durch einen Spanngurt 22 miteinander verbunden und fest anliegend zum Außenumfang 13 des Rohres 12 positioniert. Bevorzugt ist ein Gurtspannelement 23 vorgesehen, um nach dem Positionieren des Führungswagens 14 und des zumindest einen Laufwagens 21 eine fixierte Anordnung zum Außenumfang 13 des Rohres 12 zu erzeugen. Diese fixierte Anordnung ermöglicht dennoch, dass die gesamte Trenneinrichtung 11 innerhalb einer radialen Ebene entlang des Außenumfangs des Rohres 12 verfahrbar ist. Der Spanngurt 22 kann dabei auch teilweise auf dem Außenumfang 13 des Rohres 12 aufliegen.

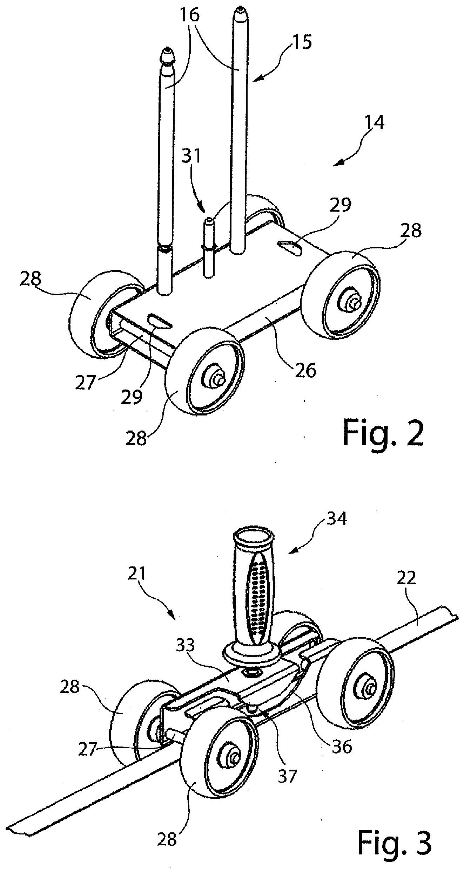

Figur 2 zeigt eine perspektivische Ansicht des Führungswagens 14. Der Führungswagen 14 umfasst ein Fahrwerk 26, an welchem zwei im Abstand zueinander angeordnete Achsen 27 zur Aufnahme von Laufrollen 28 geführt sind. An jeder Achse 27 sind zwei Laufrollen 28 vorgesehen. Diese sind im Abstand zueinander angeordnet. Zwischen den Achsen 27 ist die Führung 15 vorgesehen. Diese Führung 15 besteht bevorzugt aus zwei Führungsstangen 16. Diese können lösbar am Fahrwerk 26 befestigt und/oder auch in der Länge veränderbar sein. Am oberen Ende der Führungsstangen 16 ist bevorzugt eine Einführschräge angebracht. Die Führungsstangen 16 sind außermittig am Fahrwerk 26 vorgesehen. Bevorzugt sind diese an einer Seitenkante des Fahrwerks 26 angrenzend positioniert.

Zwischen den Führungsstangen 16 der Führung 15 ist ein Abtastelement 31 vorgesehen. Dieses Abtastelement 31 ist federgelagert im Fahrwerk 26 angeordnet und steht gegenüber einer Unterseite des Fahrwerks 26 hervor. Dadurch wird die Positionierung des Führungswagens 14 auf dem Außenumfang 13 des Rohres 12 abgetastet. Die weitere Funktion wird nachfolgend noch beschrieben.

An einem vorderen und hinteren Ende des Fahrwerkes 26 ist bevorzugt eine Befestigungsöffnung 29 vorgesehen. Daran kann ein Haken am Spanngurt 22 eingehängt werden.

In Figur 3 ist eine perspektivische Ansicht des Laufwagens 21 dargestellt. Der Laufwagen 21 umfasst ein Fahrgestell 33. Durch dieses Fahrgestell 33 werden wiederum zwei im Abstand zueinander angeordnete Achsen 27 aufgenommen, die jeweils wieder ein Laufrollenpaar bestehend aus zwei Laufrollen 28 aufnehmen. Das Fahrgestell 33 nimmt einen Betätigungsgriff 34 auf. Dieser ist in gleicher Richtung wie die Führung 15 am Fahrwerk 26 des Führungswagens 14 ausgerichtet.

Das Fahrgestell 33 weist bevorzugt eine seitliche Einfädelöffnung 36 auf, um in einfacher Weise den Spanngurt 22 im Fahrgestell 33 anzuordnen. Zur Fixierung des Spanngurtes 22 zum Laufwagen 21 ist bevorzugt innenliegend im Fahrgestell 33 eine Klemmeinrichtung 37 vorgesehen. Diese Klemmeinrichtung 37 kann durch den Betätigungsgriff 34 lösbar und arretierbar sein, sodass der Laufwagen 21 in einer definierten Position zum Spanngurt 22 gehalten ist.

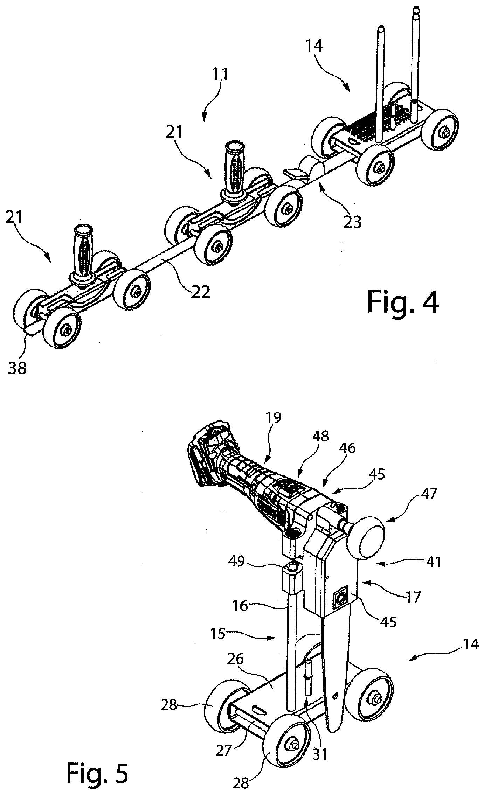

In Figur 4 ist eine perspektivische Ansicht auf die Trenneinrichtung 11 mit einem Führungswagen 14 und zwei Laufwägen 21 sowie einem Spanngurt 22 und einem Gurtspannelement 23 dargestellt. In Vorbereitung auf die Aufspannung der Trenneinrichtung 11 auf das Rohr 12 erfolgt eine Auswahl in der Anzahl der einzusetzenden Laufwägen 21, die vom Außenumfang 13 des Rohres 12 abhängig sind. Des Weiteren wird auch ein Abstand zwischen dem Laufwagen 21 zum Führungswagen 14 und gegebenenfalls zwischen dem oder zwei oder mehreren Laufwagen 21 zueinander bestimmt. Diese Einstellung des Abstandes beruht darauf, dass der Führungswagen 14 und der zumindest eine Laufwagen 21 bevorzugt im gleichen Abstand zueinander über den Außenumfang 13 des Rohres 12 verteilt sind, sodass aus einer Bedienposition zum Rohr 12 die Trenneinrichtung 13 einmal um 360° in einfacher Weise durch eine Verfahrbewegung entlang des Außenumfanges 13 des Rohrs 12 gedreht werden kann. An einem freien Ende 38 des Spanngurtes 22 ist ein Haken, ein Verschluss oder dergleichen vorgesehen, der nach dem Positionieren des Führungswagens 14 und dem zumindest einen Laufwagen 21 auf dem Außenumfang 13 des Rohres 12 in einfacher Weise in die Befestigungsöffnung 29 im Fahrwerk 26 des Führungswagens 14 einhängbar ist.

In Figur 5 ist perspektivisch eine Ansicht auf den Führungswagen 14 sowie der Sicherheitseinrichtung 17 mit der Trennvorrichtung 19 in einer Aufnahmeposition 41 zur Führung 15 dargestellt. Nach dem Aufspannen des Führungswagens 14 und des zumindest einen Laufwagens 21 auf dem Außenumfang 13 des Rohres 12 wird die Trennvorrichtung 19 zum Führungswagen 14 positioniert. In dieser Aufnahmeposition 41 steht die Trennvorrichtung 19 still. Ein Schwert der Trennvorrichtung 19 kann beispielsweise am Außenumfang 13 des Rohres 12 aufliegen. Die Sicherheitseinrichtung 17 umfasst ein Gehäuse 45. An der Schnittstelle 46 ist die Trennvorrichtung 19 angebunden. Gegenüberliegend ist ein Sicherheitsbedienelement 47 vorgesehen. Zur Betätigung der Trennvorrichtung 19 ist zunächst mit einer Hand das Sicherheitsbedienelement 47 zu betätigen, bevor über eine Ein-/Aus-Taste 48 die Trennvorrichtung 19 gestartet werden kann.

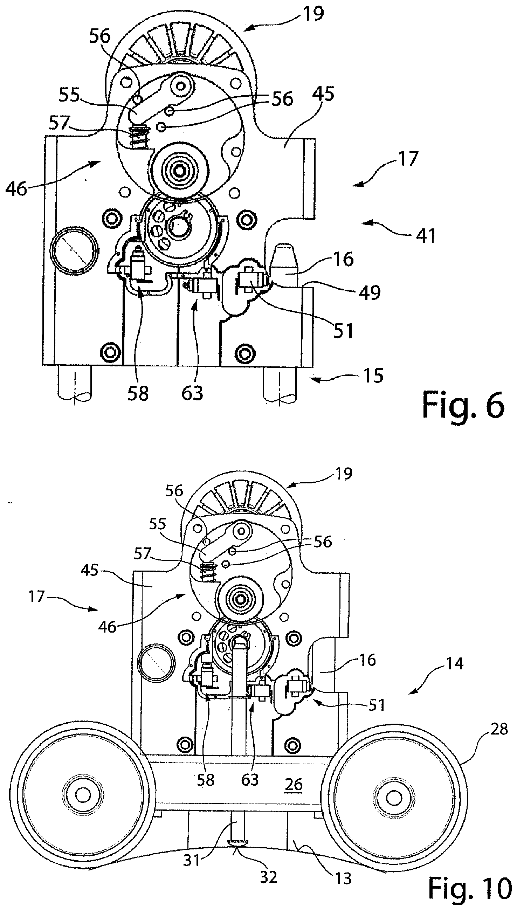

In Figur 6 ist eine schematische Ansicht auf die Schnittstelle 46 des Gehäuses 45 der Sicherheitseinrichtung 17 dargestellt. Die Anordnung des Gehäuses 45 mit deren Führungsaufnahmen 49, welche die Führungsstangen 16 umgreifen, wird durch ein Sensorelement 51 erfasst. Diese Erfassung der Position durch das Sensorelement 51 stellt vorteilhafterweise eine erste Bedingung für den Start der Trennvorrichtung 19 dar.

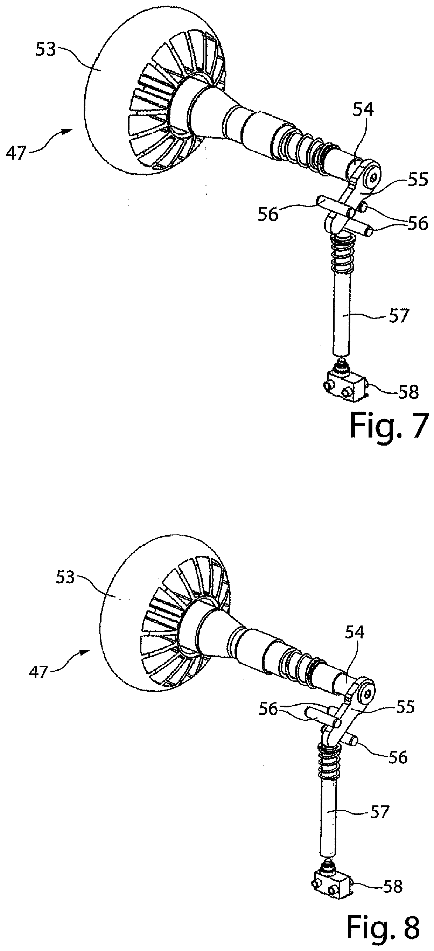

Des Weiteren ist vorteilhafterweise die Zweihandbedienung durch das Sicherheitsbedienelement 47 vorgesehen. In den Figuren 7 bis 9 sind die Komponenten und die Funktionsweise des Sicherheitsbedienelementes 47 dargestellt. Das Sicherheitsbedienelement 47 umfasst einen Handgriff 53, der in Längsrichtung zu einer Steuerachse 54 verschiebbar gelagert ist. Am Ende der Steuerachse 54 ist ein Mitnehmer 55 vorgesehen, der zwischen vorzugsweise drei Anschlägen 56 schwenkbeweglich ist. Der Mitnehmer 55 wirkt auf einen Stößel 57, der wiederum am gegenüberliegenden Ende des Mitnehmers 55 ein Sensorelement 58 betätigt. Zur Aktivierung des Sensorelementes 58 ist beispielsweise über den Handgriff 53 eine Druck- oder Schiebebewegung als erste Bewegungsaktion erforderlich. Nach einer Druck- oder Schiebebewegung ist der Mitnehmer 55 in einer Aktivierungsposition zum Stößel 57, wie dies in Figur 8 dargestellt ist. Durch eine darauffolgende Drehbewegung des Handgriffs 53 wird der Stößel 57 nach unten zur Aktivierung des Sensorelementes 58 bewegt.

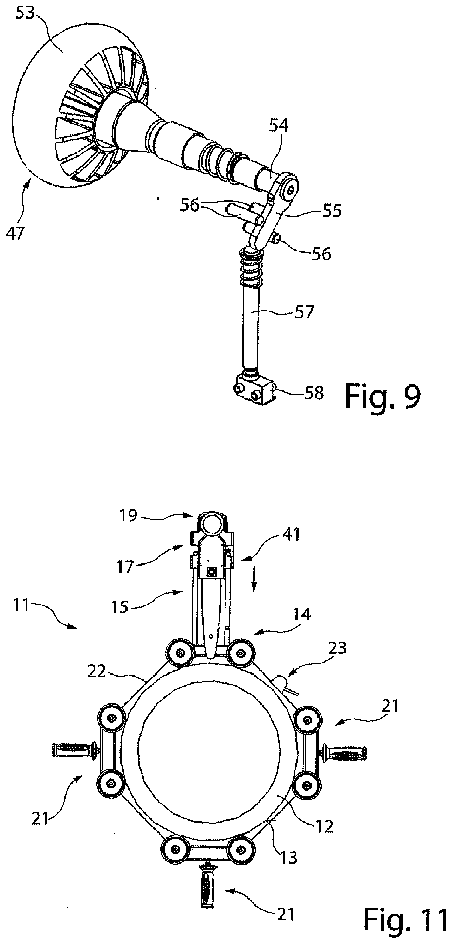

Bei Einnahme dieser in Figur 9 dargestellten Schaltposition des Sensorelementes 58 wird darauffolgend die Ein-/Aus-Taste 48 betätigt und die Trennvorrichtung 19 aktiviert. Diese Situation ist beispielsweise in den Figuren 10 und 11 dargestellt.

In einer darauffolgenden ersten Phase erfolgt ein Einstich in das Rohr 12. Das Gehäuse 45 der Sicherheitsvorrichtung 17 wird entlang der Führung 15 in eine Trennposition 61 übergeführt.

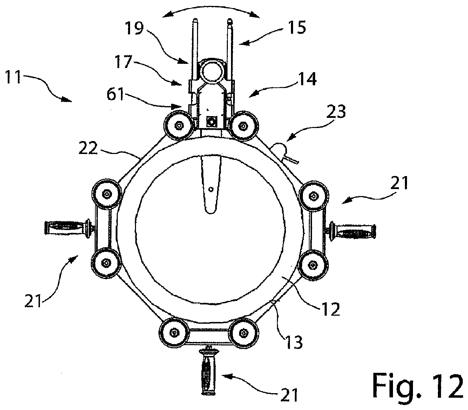

Diese Trennposition 61 der Sicherheitsvorrichtung 17 zum Führungswagen 14 ist in Figur 12 und vergrößert in Figur 10 in einer Seitenansicht dargestellt. Daraus geht des Weiteren hervor, dass das Sensorelement 51, welches der Führungsaufnahme 49 zugeordnet ist, weiter aktiviert ist. Das Sensorelement 58 ist aktiviert. Darüber hinaus ist ein weiteres Sensorelement 63 aktiviert, welches die Position des Abtastelementes 31 erfasst. Dieses liegt mit einer Auflagefläche 32, beispielsweise in Form eines Pilzkopfes, auf dem Außenumfang 13 auf, und wurde in eine obere Position zum Fahrwerk 26 verfahren, sodass das Abtastelement 31 das Sensorelement 63 aktiviert. Die Sicherheitseinrichtung 17 kann in eine arretierte Trennposition übergeführt sein, sodass sich die Sicherheitseinrichtung 17 mit der Trennvorrichtung 19 nicht selbständig vom Führungswagen 14 löst. Sobald von den Sensorelementen 51, 58, 63 ein Signal ausgegeben ist, dass die zu überwachenden Positionen eingenommen sind, kann das Sicherheitsbedienelement 47 gelöst werden, und die Trennvorrichtung 19 bleibt aktiviert. Sofern nur ein Signal der Trennvorrichtung 19 in der Trennposition 61 nicht vorhanden ist, wird die Trennvorrichtung 19 stillgesetzt.

In Figur 11 ist eine schematische Stirnansicht auf das Rohr 12 mit der darauf angeordneten Trennvorrichtung 11 dargestellt. Die vorbeschriebenen Funktionen und Schritte zu den Figuren 5 und 6 finden beim Aufsetzen der Sicherheitseinrichtung 17 mit der Trennvorrichtung 19 auf den Führungswagen 14 statt. Darauffolgend werden in der in Figur 11 dargestellten Position der Trennvorrichtung 19 die weiteren Schritte gemäß den Figuren 7 bis 10 durchgeführt. Die Trennposition 61 der Trennvorrichtung 19 ist in Figur 12 dargestellt. Die Sicherheitseinrichtung 17 ist zum Führungswagen 14 in dieser Position gesichert gehalten, und die Trennvorrichtung 19 bleibt aktiviert. Anschließend erfolgt eine Drehbewegung der Trenneinrichtung 11 um eine Längsachse des Rohres 12. Durch diese Stirnansicht gemäß Figur 12 ist ersichtlich, dass eine einzige seitliche Position durch die Bedienperson genügt, um aufeinanderfolgend am Führungswagen und den Laufwägen 21 anzugreifen, die Trenneinrichtung 11 einmalig um 360° zu drehen und einen vollständigen Trennschnitt einzubringen.

## Patentansprüche

1. Trenneinrichtung für Rohre, insbesondere Kunststoffrohre,
- mit einem Führungswagen (14), der Laufrollen (28) zum Abrollen an einem Außenumfang (13) eines Rohres (12) aufweist,
- mit einer auf dem Führungswagen (14) vorgesehenen Führung (15),
- mit einer Sicherheitseinrichtung (17), welche zumindest eine Führungsaufnahme (49) aufweist, durch welche die Sicherheitseinrichtung (17) zur Führung (15) anordenbar ist, und welche eine Schnittstelle (46) aufweist, an die eine Trennvorrichtung (19) anschließbar ist,
- mit zumindest einem Laufwagen (21),
- mit einem Spanngurt (22), der an dem Führungswagen (14) und zumindest einem Laufwagen (21) befestigbar ist, und
- mit einem Gurtspannelement (23), sodass der Führungswagen (14) und der zumindest eine Laufwagen (21) an einem Außenumfang (13) des Rohres (12) durch den Spanngurt (22) anliegend und fixiert gehalten sind.

2. Trenneinrichtung nach Anspruch 1, **dadurch gekennzeichnet, dass** der Führungswagen (14) ein Fahrwerk (26) aufweist, an welchem beabstandet zwei Achsen (27) zur Aufnahme von Laufrollen (28) vorgesehen sind und zwischen den Achsen (27) die Führung (15) zur Aufnahme der Trenneinrichtung (19) vorgesehen ist, welche vorzugsweise zu einer Seite des Fahrwerks (26) ausgerichtet ist.

3. Trenneinrichtung nach Anspruch 2, **dadurch gekennzeichnet, dass** die Führung (15) aus zumindest zwei, vorzugsweise in der Länge veränderbare und/oder lösbar am Fahrwerk (26) angeordnete, Führungsstangen (16) ausgebildet ist.

4. Trenneinrichtung nach Anspruch 2 oder 3, **dadurch gekennzeichnet, dass** der Führung (15) am Fahrwerk (26) zugeordnet ein relativ zum Fahrwerk (26) verschiebbares Abtastelement (31) vorgesehen ist, welches sich zwischen den Laufrollen (28) sowohl in Richtung auf den Außenumfang (13) des Rohres (12) als auch in entgegengesetzter Richtung entlang der Führung (15) erstreckt.

5. Trenneinrichtung nach einem der Ansprüche 2 bis 4, **dadurch gekennzeichnet, dass** der Spanngurt (22) am Fahrwerk (26) des Führungswagens (14) einhängbar ist, oder dass der Spanngurt (22) an oder durch das Fahrwerk (26) entlangführbar oder hindurchführbar gehalten ist.

6. Trenneinrichtung nach einem der vorhergehenden Ansprüche, **dadurch gekennzeichnet, dass** der Laufwagen (21) ein Fahrgestell (33) aufweist, an welchem beabstandet zueinander zwei Achsen (27) zur Aufnahme von Laufrollen (28) vorgesehen sind und zwischen den Achsen (27) ein Betätigungsgriff (34) vorgesehen ist, der sich vorzugsweise in entgegengesetzter Richtung zur Abroll-ebene der Laufrollen (28) erstreckt.

7. Trenneinrichtung nach Anspruch 6, **dadurch gekennzeichnet, dass** der Spanngurt (22) an oder in dem Fahrgestell (33) anordenbar und/oder hindurchführbar ist und vorzugsweise durch den Betätigungsgriff (34) eine Klemmvorrichtung (37) zur Fixierung des Spanngurtes (22) zum Fahrgestell (33) betätigbar ist.

8. Trenneinrichtung nach einem der vorhergehenden Ansprüche, **dadurch gekennzeichnet, dass** die Sicherheitseinrichtung (17) ein Gehäuse (45) umfasst, in welchem die Führungsaufnahmen (49) vorgesehen sind und/oder in welchem zumindest ein Sensorelement (51, 58, 63) angeordnet ist.

9. Trenneinrichtung nach Anspruch 8, **dadurch gekennzeichnet, dass** an oder im Gehäuse (45) der Sicherheitseinrichtung (17) das zumindest eine Sensorelement (51) zur Abfrage einer Aufnahmeposition (41) der Sicherheitseinrichtung (17) auf der Führung (15) vorgesehen ist.

10. Trenneinrichtung nach Anspruch 8 oder 9, **dadurch gekennzeichnet, dass** an oder im Gehäuse (45) der Sicherheitseinrichtung (17) und der Schnittstelle (46) zur Aufnahme der Trenneinrichtung (19) zugeordnet ein Sicherheitsbedienelement (47) für eine Zweihandbedienung zum Start der Trennvorrichtung (19) vorgesehen ist.

11. Trenneinrichtung nach Anspruch 10, **dadurch gekennzeichnet, dass** das Sicherheitsbedienelement (47) durch eine Kombination von wenigstens zwei Betätigungsaktionen aktivierbar ist, und vorzugsweise eine Zieh- oder Drückbewegung und eine Dreh- oder Schiebebewegung miteinander kombinierbar sind, bevor das Sensorelement (58) betätigbar und eine Betätigung einer Ein-/Aus-Taste (48) der Trennvorrichtung (19) gegeben ist.

12. Trenneinrichtung nach einem der Ansprüche 8 bis 11, **dadurch gekennzeichnet, dass** die Sicherheitseinrichtung (17) mit der angetriebenen Trennvorrichtung (19) aus der Aufnahmeposition (41) entlang der Führung (15) verfahrbar in eine Trennposition (61) überführbar ist.

13. Trenneinrichtung nach einem der Ansprüche 8 bis 12, **dadurch gekennzeichnet, dass** an oder im Gehäuse (45) der Sicherheitseinrichtung (46) ein weiteres Sensorelement (63) vorgesehen ist, welche durch das Abtastelement (31) am Führungswagen (15) beim Aufliegen des Führungswagens (15) auf dem Außenumfang (13) des Rohres (12) und bei Einnahme der Trennposition (61) der Sicherheitseinrichtung (17) aktivierbar ist und vorzugsweise die Sicherheitseinrichtung (17) in dieser Trennposition (61) zum Führungswagen (14) arretierbar ist.

14. Trenneinrichtung nach einem der vorhergehenden Ansprüche, **dadurch gekennzeichnet, dass** nach einer aufeinanderfolgenden Abfrage von Signalen der Sensorelemente (51, 58, 63) und der Abfrage des Signals von den Abtastelementen (31) das Vorhandensein der Sicherheitseinrichtung (17) in der Trennposition (61) erfassbar ist und beim Erfassen aller Signale die Trenneinrichtung (19) sich nicht selbständig stillsetzt.

15. Trenneinrichtung nach einem der vorhergehenden Ansprüche, **dadurch gekennzeichnet, dass** die Trennvorrichtung (19) als eine Kettensäge, Stichsäge oder Kreissäge ausgebildet ist und/oder dass die Trennvorrichtung (19) mit einem Akkumulator betrieben ist.

16. Verfahren zum Trennen eines Rohrabschnitts von einem Rohr (12), insbesondere Kunststoffrohr,
- bei dem eine Trenneinrichtung (11) nach einem der Ansprüche 1 bis 15 eingesetzt wird,
- bei dem der Führungswagen (15) und der zumindest eine Laufwagen (21) mit dem Spanngurt (22) verbunden werden,
- bei dem der Führungswagen (14) und der zumindest eine Laufwagen (21) auf dem Außenumfang (13) des Rohres (12) positioniert werden,
- bei dem der Spanngurt (22) an dem Führungswagen (15) oder dem zumindest einen Laufwagen (21) befestigt und durch das Gurtspannelement (23) gespannt wird,
- bei dem die Sicherheitseinrichtung (17) mit der Trennvorrichtung (19) auf der Führung (15) des Führungswagens (14) positioniert und das Sicherheitsbedienelement (47) sowie darauffolgend die Ein-/Aus-Taste der Trennvorrichtung (19) betätigt wird,
- bei dem die Trennvorrichtung (19) aus der Aufnahmeposition (41) in die Trennposition (61) übergeführt und die Sicherheitseinrichtung (17) zum Führungswagen (14) in der Trennposition (61) arretiert wird, und
- bei dem der Führungswagen (14) und der zumindest eine Laufwagen (21) einmal um 360° entlang dem Außenumfang (13) des Rohres (12) verfahren werden.

## Claims

1. A separating device for pipes, in particular plastic pipes,
- with a guide carriage (14) which has rollers (28) for rolling on an outer circumference (13) of a pipe (12),
- with a guide (15) provided on the guide carriage (14),
- with a safety device (17) which has at least one guide receptacle (49) by means of which the safety device (17) can be arranged with respect to the guide (15), and which has an interface (46) to which a separating device (19) can be connected,
- with at least one carriage (21),
- with a tensioning belt (22) which can be fastened to the guide carriage (14) and at least one carriage (21), and
- with a belt tensioning element (23), so that the guide carriage (14) and the at least one carriage (21) are held in contact and fixed on an outer circumference (13) of the pipe (12) by the tensioning belt (22).

2. The separating device according to Claim 1, **characterised in that** the guide carriage (14) has a running gear (26) on which two axles (27) are provided at a distance for receiving rollers (28) and between the axles (27) the guide (15) for receiving the separating device (19) is provided, which is preferably aligned to one side of the running gear (26).

3. The separating device according to Claim 2, **characterised in that** the guide (15) is formed from at least two guide rods (16) which are preferably variable in length and/or detachably arranged on the running gear (26).

4. The separating device according to Claim 2 or 3, **characterised in that** a scanning element (31) displaceable relative to the running gear (26) is provided associated with the guide (15) on the running gear (26), which scanning element extends between the rollers (28) both in the direction towards the outer circumference (13) of the pipe (12) and in the opposite direction along the guide (15).

5. The separating device according to one of Claims 2 to 4, **characterised in that** the tensioning belt (22) can be suspended on the running gear (26) of the guide carriage (14), or **in that** the tensioning belt (22) can be passed along or through the running gear (26).

6. The separating device according to one of the preceding claims, **characterised in that** the carriage (21) has a chassis (33) on which two axles (27) are provided at a distance from one another for receiving rollers (28) and an actuating handle (34) is provided between the axles (27) which preferably extends in the opposite direction to the rolling plane of the rollers (28).

7. The separating device according to Claim 6, **characterised in that** the tensioning belt (22) can be arranged on or in and/or passed through the chassis (33) and a clamping device (37) for fixing the tensioning belt (22) to the chassis (33) can be actuated, preferably by means of the actuating handle (34).

8. The separating device according to one of the preceding claims, **characterised in that** the safety device (17) comprises a housing (45) in which the guide receptacles (49) are provided and/or in which at least one sensor element (51, 58, 63) is arranged.

9. The separating device according to Claim 8, **characterised in that** the at least one sensor element (51) for querying a receiving position (41) of the safety device (17) on the guide (15) is provided on or in the housing (45) of the safety device (17).

10. The separating device according to Claim 8 or 9, **characterised in that** a safety operating element (47) for two-hand operation to start the separating device (19) is provided on or in the housing (45) of the safety device (17) and is assigned to the interface (46) for receiving the separating device (19).

11. The separating device according to Claim 10, **characterised in that** the safety operating element (47) can be activated by a combination of at least two actuation actions, and preferably a pulling or pushing movement and a rotating or pushing movement can be combined with one another before the sensor element (58) can be actuated and an actuation of an on/off button (48) of the separating device (19) is given.

12. The separating device according to one of Claims 8 to 11, **characterised in that** the safety device (17) can be moved from the receiving position (41) along the guide (15) into a separating position (61) with the driven separating device (19).

13. The separating device according to one of Claims 8 to 12, **characterised in that** a further sensor element (63) is provided on or in the housing (45) of the safety device (46), which can be activated by the scanning element (31) on the guide carriage (15) when the guide carriage (15) rests on the outer circumference (13) of the pipe (12) and when the safety device (17) assumes the separating position (61), and the safety device (17) can preferably be locked in this separating position (61) relative to the guide carriage (14).

14. The separating device according to one of the preceding claims, **characterised in that** after a successive querying of signals from the sensor elements (51, 58, 63) and the querying of the signal from the scanning elements (31), the presence of the safety device (17) in the separating position (61) can be detected and the separating device (19) does not shut down automatically when all signals are detected.

15. The separating device according to one of the preceding claims, **characterised in that** the separating device (19) is designed as a chain saw, jigsaw or circular saw and/or that the separating device (19) is operated with an accumulator.

16. A method for separating a pipe section from a pipe (12), in particular a plastic pipe,
- in which a separating device (11) according to one of Claims 1 to 15 is used,
- in which the guide carriage (15) and the at least one carriage (21) are connected to the tensioning belt (22),
- in which the guide carriage (14) and the at least one carriage (21) are positioned on the outer circumference (13) of the pipe (12),
- in which the tensioning belt (22) is fastened on the guide carriage (15) or the at least one carriage (21) and tensioned by the belt tensioning element (23),
- in which the safety device (17) with the separating device (19) is positioned on the guide (15) of the guide carriage (14) and the safety operating element (47) and then the on/off button of the separating device (19) are actuated,
- in which the separating device (19) is transferred from the receiving position (41) to the separating position (61) and the safety device (17) is locked in the separating position (61) relative to the guide carriage (14), and
- in which the guide carriage (14) and the at least one carriage (21) are moved once by 360° along the outer circumference (13) of the pipe (12).

## Revendications

1. Dispositif de séparation pour tubes, en particulier pour tubes en matière plastique,
- comportant un chariot de guidage (14), lequel comporte des galets de roulement (28) pour rouler sur une circonférence extérieure (13) d'un tube (12),
- comportant un guidage (15) situé sur le chariot de guidage (14),
- comportant un dispositif de sécurité (17), lequel comporte au moins un logement de guidage (49) à travers lequel le dispositif de sécurité (17) peut être disposé pour le guidage (15) et lequel comporte une interface (46) à laquelle peut être relié un dispositif de séparation (19),
- comportant au moins un chariot (21),
- comportant une courroie de tension (22), laquelle peut être fixée au chariot de guidage (14) et à au moins un chariot (21), et
- comportant un élément tendeur de courroie (23) de façon que le chariot de guidage (14) et l'au moins un chariot (21) soient maintenus en appui et fixés sur une circonférence extérieure (13) du tube (12) au moyen de la courroie de tension (22).

2. Dispositif de séparation selon la revendication 1, **caractérisé en ce que** le chariot de guidage (14) comporte un train de roulement (26) sur lequel sont fournis deux axes (27) espacés pour recevoir des galets de roulement (28) et entre les axes (27) le guidage (15) est fourni pour loger le dispositif de séparation (19), lequel est, de préférence, aligné sur un côté du train de roulement (26).

3. Dispositif de séparation selon la revendication 2, **caractérisé en ce que** le guidage (15) est formé d'au moins deux tiges de guidage (16), de préférence modifiables en longueur et/ou disposées de manière amovible sur le train de roulement (26).

4. Dispositif de séparation selon la revendication 2 ou 3, **caractérisé en ce que** le guidage (15) sur le train de roulement (26) est associé à un élément palpeur (31) pouvant se déplacer par rapport au train de roulement (26) et lequel s'étend entre les galets de roulement (28) dans la direction de la circonférence extérieure (13) du tube (12) ainsi que dans la direction opposée le long du guidage (15).

5. Dispositif de séparation selon l'une quelconque des revendications 2 à 4, **caractérisé en ce que** la courroie de tension (22) peut être suspendue au train de roulement (26) du chariot de guidage (14) ou **en ce que** la courroie de tension (22) peut être guidée le long ou à travers le train de roulement (26).

6. Dispositif de séparation selon l'une quelconque des revendications précédentes, **caractérisé en ce que** le chariot (21) comporte un châssis (33) sur lequel sont fournis deux axes (27) espacés l'un de l'autre pour recevoir les galets de roulement (28) et, entre les des axes (27), une poignée d'actionnement (34) est fournie, laquelle s'étend, de préférence, dans la direction opposée au plan de roulement des galets de roulement (28).

7. Dispositif de séparation selon la revendication 6, **caractérisé en ce que** la courroie de tension (22) peut être disposée et/ou traversée sur ou dans le châssis (33) et, de préférence, un dispositif de serrage (37), pour fixer la courroie de tension (22) au châssis (33), peut être actionné au moyen de la poignée d'actionnement (34).

8. Dispositif de séparation selon l'une quelconque des revendications précédentes, **caractérisé en ce que** le dispositif de sécurité (17) comprend un boîtier (45) dans lequel sont fournis les logements de guidage (49) et/ou dans lequel est disposé au moins un élément capteur (51, 58, 63).

9. Dispositif de séparation selon la revendication 8, **caractérisé en ce que**, sur ou dans le boîtier (45) du dispositif de sécurité (17), l'au moins un élément capteur (51) est fourni, pour interroger une position de logement (41) du dispositif de sécurité (17), sur le guidage (15).

10. Dispositif de séparation selon la revendication 8 ou 9, **caractérisé en ce qu'**un élément de commande de sécurité (47), destiné à une commande à deux mains pour démarrer le dispositif de séparation (19), associé au logement du dispositif de séparation (19), est fourni sur ou dans le boîtier (45) du dispositif de sécurité (17) et de l'interface (46).

11. Dispositif de séparation selon la revendication 10, **caractérisé en ce que** l'élément de commande de sécurité (47) peut être activé par une combinaison d'au moins deux actions d'actionnement, et, de préférence un mouvement de traction ou de pression et un mouvement de rotation ou de glissement peuvent être combinés l'un à l'autre avant que l'élément capteur (58) puisse être actionné et un actionnement d'une touche marche/arrêt (48) du dispositif de séparation (19) peut être effectué.

12. Dispositif de séparation selon l'une quelconque des revendications 8 à 11, **caractérisé en ce que** le dispositif de sécurité (17), avec le dispositif de séparation (19) entraîné, peut être déplacé de la position de logement (41) le long du guidage (15) dans une position de séparation (61).

13. Dispositif de séparation selon l'une quelconque des revendications 8 à 12, **caractérisé en ce que**, sur ou dans le boîtier (45) du dispositif de sécurité (46), un autre élément capteur (63) est fourni, lequel peut être activé par l'élément palpeur (31) sur le chariot de guidage (15) lors de l'appui du chariot de guidage (15) sur la circonférence extérieure (13) du tube (12) et lors de la prise de la position de séparation (61) du dispositif de sécurité (17) et, de préférence le dispositif de sécurité (17) peut être verrouillé dans cette position de séparation (61) par rapport au chariot de guidage (14).

14. Dispositif de séparation selon l'une quelconque des revendications précédentes, **caractérisé en ce qu'**après une interrogation successive des signaux des éléments capteurs (51, 58, 63) et l'interrogation du signal des éléments palpeurs (31), la présence du dispositif de sécurité (17) dans la position de séparation (61) peut être détectée et, lors de la détection de tous les signaux, le dispositif de séparation (19) ne s'arrête pas automatiquement.

15. Dispositif de séparation selon l'une quelconque des revendications précédentes, **caractérisé en ce que** le dispositif de séparation (19) est conçu sous la forme d'une scie à chaîne, d'une scie sauteuse ou d'une scie circulaire et/ou **en ce que** le dispositif de séparation (19) est entraîné au moyen d'un accumulateur.

16. Procédé de séparation d'une section d'un tube (12), en particulier d'un tube en matière plastique,
- dans lequel est utilisé un dispositif de séparation (11) selon l'une quelconque des revendications 1 à 15,
- dans lequel le chariot de guidage (15) et l'au moins un chariot (21) sont reliés à la courroie de tension (22),
- dans lequel le chariot de guidage (14) et l'au moins un chariot (21) sont positionnés sur la circonférence extérieure (13) du tube (12),
- dans lequel la courroie de tension (22) est fixée sur le chariot de guidage (15) ou à l'au moins un chariot (21) et tendue au moyen de l'élément tendeur de courroie (23),
- dans lequel le dispositif de sécurité (17), avec le dispositif de séparation (19), est positionné sur le guidage (15) du chariot de guidage (14) et l'élément de commande de sécurité (47) ainsi que la touche marche/arrêt du dispositif de séparation (19) sont actionnés,
- dans lequel le dispositif de séparation (19) est transféré de la position de logement (41) à la position de séparation (61) et le dispositif de sécurité (17) par rapport au chariot de guidage (14) est verrouillé dans la position de séparation (61), et
- dans lequel le chariot de guidage (14) et l'au moins un chariot (21) sont déplacés une fois de 360° le long de la circonférence extérieure (13) du tube (12).
